# EUROPÄISCHE PATENTSCHRIFT

(11) **EP 1 205 360 B1**
(45) Veröffentlichungstag und Bekanntmachung des Hinweises auf die Patenterteilung: **26.10.2005**
(21) Anmeldenummer: 01122603.2
(22) Anmeldetag: 26.09.2001
(51) Int. Cl.: B60R 13/10, B60Q 1/56

(54) **Schaltungsanordnung für ein selbstleuchtendes Kennzeichen**
Switching assembly for a self-illuminating number plate
Ensemble d'interrupteurs pour une plaque d'immatriculation luminescente

(30) Priorität: 10.11.2000 DE 10055667
(43) Veröffentlichungstag der Anmeldung: 15.05.2002
(73) Patentinhaber: Volkswagen Aktiengesellschaft, 38436 Wolfsburg (DE)
(72) Erfinder: Müller, Michael, 38518 Gifhorn (DE); Aufdermauer, Detlef, Dr., 38179 Schwülper (DE)
(74) Vertreter: Meyer, Enno

(56) Entgegenhaltungen:
- EP-A- 0 976 617
- DE-U- 20 004 189
- GB-A- 2 227 115
- GB-A- 2 340 982

## Beschreibung

Die Erfindung betrifft eine Schaltungsanordnung für ein selbstleuchtendes Kennzeichen eines Kraftfahrzeugs gemäß dem Oberbegriff des Anspruchs 1.

Kennzeichenschilder für Kraftfahrzeuge sind allgemein bekannt, wobei diese sowohl front- als auch heckseitig an einem Fahrzeug befestigt sind und eine Schildfläche aufweisen, die mit einem die örtliche Zulassungsstelle des Kraftfahrzeugs definierenden Kennzeichen versehen sind. Dabei haben konventionelle Kennzeichen eine reflektierende Oberfläche, wodurch sie auch bei Dunkelheit lesbar sind, da üblicherweise dem Kennzeichenschild eine Beleuchtung zugeordnet ist, die durch seitlich, oberhalb und/oder unterhalb der Schildfläche angeordnete Glühlampen bewirkt wird.

Um eine verbesserte Sichtbarkeit des im Dunkeln beleuchteten Kennzeichenschildes zu bewirken, ist in der DE-A-198 27 477 (Oberbegriff von Anspruch 1) ein selbstleuchtendes Kennzeichenschild beschrieben, wobei das Kennzeichenschild durch eine im Bereich der Kennzeichnung angeordnete, elektrisch aktivierbare Leuchtfolienanordnung mit einer zumindest teilweise transparenten Gestaltung der Schildfläche beleuchtet wird. Durch eine derartige selbstleuchtende Ausführung des Kennzeichenschildes ist eine separate Beleuchtung des Kennzeichenschildes im Prinzip nicht mehr notwendig. Um ein selbstleuchtendes Kennzeichen zum Leuchten zu bringen, kann beispielsweise eine Elektroluminiszenzleuchtfolie verwendet werden, die von einem Vorschaltgerät mit Spannung versorgt und angesteuert wird. Die zur Aktivierung der elektroluminiszenten Folie notwendige Spannung hängt von der Folie ab und liegt üblicherweise zwischen 50 und 150 Volt, wobei je nach verwendetem Elektroluminiszenzeffekt eine Wechsel- oder Gleichspannung zur Erzeugung des notwendigen elektrischen Feldes in der Folie verwendet wird. Diese notwendige Spannung wird von dem Vorschaltgerät aus der 12V-Bordnetzspannung erzeugt. Üblicherweise wird das Vorschaltgerät des oder der selbstleuchtenden Kennzeichen mit dem Einschalten des Kraftfahrzeuglichts aktiviert.

Nachteilig bei heutigen selbstleuchtenden Kennzeichen ist, daß es einerseits für den Fahrer eines Kraftfahrzeugs nicht ohne weiteres erkennbar ist, ob im Betrieb das selbstleuchtende Kennzeichen auch tatsächlich leuchtet und es weiterhin nicht möglich ist, in einer Halterung für ein selbstleuchtendes Kennzeichen auch ein Standardkennzeichen zu verwenden.

Der Erfindung liegt daher die Aufgabe zugrunde, eine Schaltungsanordnung zu schaffen, die die oben genannten Nachteile vermeidet

Die Aufgabe wird durch die Merkmale des Anspruchs 1 gelöst. Bevorzugte Ausgestaltungen und Weiterbildungen sind Gegenstand der Unteransprüche.

Die erfindungsgemäße Schaltungsanordnung für ein selbstleuchtendes Kennzeichen weist ein selbstleuchtendes Kennzeichen, ein Steuergerät zum Ansteuern des selbstleuchtenden Kennzeichens und eine Vorrichtung zur Detektion der Funktionsfähigkeit des selbstleuchtenden Kennzeichens auf.

Ferner weist die Anordnung eine zusätzliche Kennzeichenbeleuchtung auf, die abgeschaltet ist, wenn das Steuergerät die Funktionsfähigkeit des selbstleuchtenden Kennzeichens erkennt, und die eingeschaltet ist, wenn das Steuergerät eine Fehlfunktion des selbstleuchtenden Kennzeichens detektiert.

Ferner kann das selbstleuchtende Kennzeichen als sog. Umfeldbeleuchtung dienen, indem daß das Steuergerät der Schaltungsanordnung das selbstleuchtende Kennzeichen mit Spannung beaufschlagt, wenn das Kraftfahrzeug entriegelt wird. In diesem Fall wird das Steuergerät eine Messung der Funktionsfähigkeit des selbstleuchtenden Kennzeichens durchführen, wobei bei der Entriegelung des Kraftfahrzeugs die zusätzliche Kennzeichenleuchte als Umfeldleuchte verwendet wird, wenn das Steuergerät eine Fehlfunktion des selbstleuchtenden Kennzeichens detektiert.

Eine Detektion der Funktionsfähigkeit des selbstleuchtenden Kennzeichens kann elektrisch oder optisch erfolgen auf an sich bekannte Weise erfolgen, so daß das Steuergerät ein Detektionssignal über eine Detektionsleitung empfängt, aus dem auf die Funktionsfähigkeit des selbstleuchtenden Kennzeichens geschlossen wird. Das Detektionssignal wird vorzugsweise in dem Vorschaltgerät des selbstleuchtenden Kennzeichens erzeugt und an das Steuergerät übergeben.

Vorteilhafterweise ist es durch die erfindungsgemäße Schaltungsanordnung möglich, anstelle eines selbstleuchtenden Kennzeichens ein konventionelles Kennzeichen zu verwenden und in die entsprechende Halterung des Kraftfahrzeugs zu montieren, da das Steuergerät dann eine Fehlfunktion des Kennzeichens feststellt und die zusätzliche Kennzeichenleuchte aktiviert. In diesem Fall wird vorzugsweise die Messung der Funktionsfähigkeit des Kennzeichens während des laufenden Betriebs des Kraftfahrzeugs bzw. der Kraftfahrzeugbeleuchtung eingestellt.

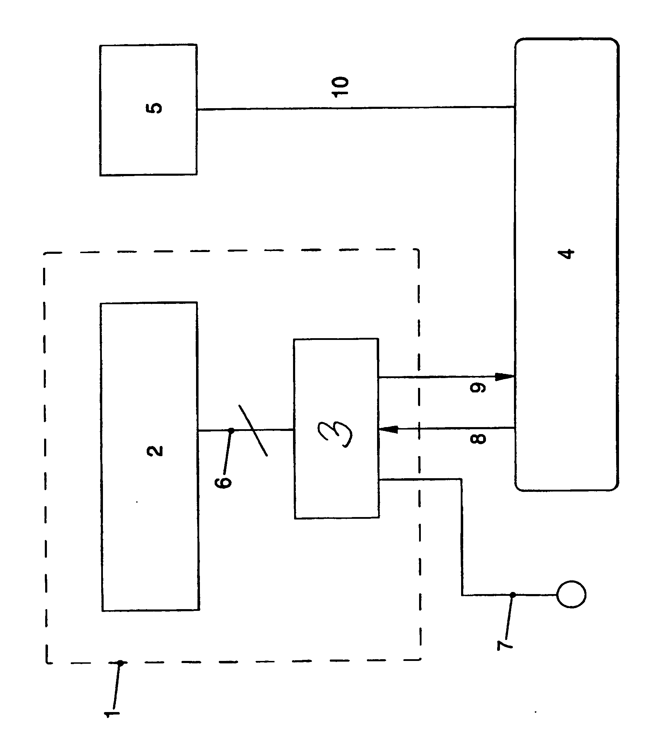

Eine bevorzugte Ausführungsform wird nachfolgend anhand der einzigen Figur erläutert.

Die Figur zeigt ein selbstleuchtendes Kennzeichen 1, das eine elektroluminiszenten Folie 2 und ein Vorschaltgerät 3 aufweist, wobei das Vorschaltgerät 3 über eine vorbestimmte Anzahl Kabel 6 mit der Folie 2 verbunden ist. Das Vorschaltgerät dient u.a. zur Erzeugung der zum Betrieb der Folie 2 notwendigen Spannung und detektiert die Funktionsfähigkeit der Folie 2. Das selbstleuchtende Kennzeichen bzw. dessen Vorschaltgerät 3 ist mit einem Steuergerät 4 verbunden ist, wobei das Steuergerät 4 das selbstleuchtende Kennzeichen 1 bzw. das Vorschaltgerät 3 über eine Leitung 8 ansteuert. Ferner wird das Vorschaltgerät 3 über eine Leitung 7 mit Bordnetzspannung versorgt. Weiterhin weist die Schaltungsanordnung eine zusätzliche Kennzeichenleuchte 5 auf, die ebenfalls über eine Leitung 10 mit dem Steuergerät 4 verbunden ist und von diesem angesteuert bzw. mit Spannung beaufschlagt wird. Bei der zusätzlichen Kennzeichenleuchte 5 werden bekannte Leuchtmittel verwendet, beispielsweise eine Glühlampe oder entsprechende Leuchtdioden. In einer bevorzugten Ausführungsform weist die zusätzliche Kennzeichenleuchte 5 mehrere Leuchtmittel auf, beispielsweise vier, wobei diese Leuchtmittel alle oder zumindest teilweise dimmbar sind. Das Vorschaltgerät 3 detektiert die Funktionsfähigkeit des selbstleuchtenden Kennzeichens 1 und gibt über eine Leitung 9 ein geeignetes Signal an das Steuergerät 4 ab. Die Detektion der Funktionsfähigkeit kann auch vom Steuergerät übernommen werden, das anhand eines geeigneten Signals des Vorschaltgeräts 3 über die Funktionsfähigkeit des selbstleuchtenden Kennzeichens 1 entscheidet und entsprechende Maßnahmen bewirkt. Geeignete Meßverfahren zur Bestimmung der Funktionsfähigkeit des selbstleuchtenden Kennzeichens sind bekannt.

In jedem Fall wird aus dem Signal der Leitung 9 durch das Steuergerät 4 auf die Funktionsfähigkeit des selbstleuchtenden Kennzeichens 1 geschlossen, wobei die folgenden Fälle möglich sind.

Ist das entsprechende Detektionssignal positiv bzw. hat das Steuergerät 4 die Funktionsfähigkeit des selbstleuchtenden Kennzeichens 1erkannt, so wird seitens des Steuergeräts 4 nichts weiter veranlaßt, so daß das Kennzeichen 1 bestimmungsgemäß leuchtet.

Hat bei eingeschalteter Beleuchtung das Steuergerät 4 einen Funktionsfehler des selbstleuchtenden Kennzeichens 1 detektiert bzw. erkannt, so kann dies zwei Ursachen haben. Einerseits kann das selbstleuchtende Kennzeichen 1 defekt sein. Andererseits kann es sich bei dem Kennzeichen um ein Standardkennzeichen, das nicht selbstleuchtend ist, handeln. In jedem Fall wird die zusätzliche konventionelle Kennzeichenleuchte 5 eingeschaltet, so daß das Kennzeichen 1 bei eingeschalteter Fahrzeugbeleuchtung beleuchtet wird. Ferner kann eine Meldung angezeigt werden, daß das selbstleuchtende Kennzeichen 1 defekt bzw. nicht vorhanden ist. Weiterhin kann die über die Leitung 7 zugeführte Spannung des selbstleuchtenden Kennzeichens 1 abgeschaltet werden, um eventuelle Spannungsverluste und damit eine unnötige Belastung des Bordnetzes zu vermeiden.

Weiterhin kann in der bevorzugten Ausführungsform das selbstleuchtende Kennzeichen 1 als Umfeldleuchte des Kraftfahrzeugs verwendet werden, beispielsweise wenn mittels des Kraftfahrzeugschlüssels ein abgeschlossenes Kraftfahrzeug entriegelt wird, da in diesem Fall zur Orientierung des Kraftfahrzeughalters im Dunkeln eine gewisse Außenbeleuchtung des Kraftfahrzeugs für eine vorgegebene Zeitdauer eingeschaltet wird. Bei der Verwendung des selbstleuchtenden Kennzeichens 1 als Umfeldleuchte des Kraftfahrzeugs wird seitens des Steuergeräts 4 ebenfalls die Funktionsfähigkeit des selbstleuchtenden Kennzeichens 1 bestimmt. Ist entweder das selbstleuchtende Kennzeichen 1 defekt oder nicht vorhanden, beispielsweise da es durch ein Standardkennzeichen ersetzt ist, so detektiert das Steuergerät 4 eine Fehlfunktion des selbstleuchtenden Kennzeichens 1 und seitens des Steuergeräts 4 werden die Leuchtmittel der zusätzlichen konventionellen Kennzeichenleuchte 5 als Umfeldbeleuchtung angesteuert und verwendet, wobei ein Teil oder die Gesamtheit der Leuchtmittel der zusätzlichen Kennzeichenleuchte 5 hoch gedimmt werden.

Die Detektion der Funktionsfähigkeit des selbstleuchtenden Kennzeichens 1 kann in vorgegebenen Zeitintervallen oder auch kontinuierlich erfolgen, so daß das Steuergerät 4 in bestimmten Intervallen oder kontinuierlich über die Funktionsfähigkeit des selbstleuchtenden Kennzeichens 1 informiert ist und im Falle eines Defekts des selbstleuchtenden Kennzeichens 1 sofort oder innerhalb kurzer Zeit einen Notbetrieb über die zusätzliche Kennzeichenleuchte 5 aktiviert.

### BEZUGSZEICHENLISTE

- 1: selbstleuchtendes Kennzeichen
- 2: Elektrolumineszenzfolie Steuergerät
- 3: Vorschaltgerät
- 4: Steuergerät
- 5: zusätzliche Kennzeichenleuchte
- 6: Leitungen
- 7: Bordnetzspannung
- 8: Signalpfad Ansteuerung
- 9: Signalpfad Funktionsfähigkeitssignal
- 10: Ansteuerung zusätzliche Kennzeichenleuchte

## Patentansprüche

1. Schaltungsanordnung für ein selbstleuchtendes Kennzeichen mit einen selbstleuchtenden Kennzeichen (1) und einem Steuergerät (4) zum Ansteuern des selbstleuchtenden Kennzeichens,
**dadurch gekennzeichnet, dass**
die Schaltungsanordnung eine Vorrichtung (3, 4) zur Detektion der Funktionsfähigkeit des selbstleuchtenden Kennzeichens (1) aufweist, und
die Anordnung eine zusätzliche Kennzeichenleuchte (5) aufweist, die angeschaltet ist, wenn das Steuergerät (4) die Funktionsfähigkeit des selbstleuchtenden Kennzeichens (1) erkennt, und die eingeschaltet ist, wenn das Steuergerät (4) eine Fehlfunktion des seibstleuchtenden Kennzeichens detektiert.

2. Schaltungsanordnung nach Anspruch 1, **dadurch gekennzeichnet, daß** das Steuergeräts (4) anhand eines Signals des selbstleuchtenden Kennzeichens (1) die Funktionsfähigkeit des selbstleuchtenden Kennzeichens (1) feststellt.

3. Schaltungsanordnung nach einem der vorangegangenen Ansprüche, **dadurch gekennzeichnet, daß** das Steuergerät (4) das selbstleuchtende Kennzeichen (1) ansteuert, wenn das die Schaltungsanordnung enthaltende Kraftfahrzeug entriegelt wird.

4. Schaltungsanordnung nach Anspruch 3, **dadurch gekennzeichnet, daß** bei der Entriegelung des Kraftfahrzeugs das selbstleuchtende Kennzeichen (1) als Umfeldbeleuchtung bei festgestellter Funktionsfähigkeit des selbstleuchtende Kennzeichens (1) verwendet wird, während die zusätzliche Kennzeichenleuchte (5) dann als Umfeldbeleuchtung zum Einsatz kommt, wenn das Steuergerät eine Fehlfunktion des selbstleuchtenden Kennzeichens detektiert.

5. Schaltungsanordnung nach einem der Ansprüche 1 bis 2, **dadurch gekennzeichnet, daß** das Steuergerät (4) die zusätzliche Kennzeichenleuchte (5) ansteuert, wenn das die Schaltungsanordnung enthaltende Kraftfahrzeug entriegelt wird.

6. Schaltungsanordnung nach einem der vorangegangenen Ansprüche, **dadurch gekennzeichnet, daß** die Detektion der Funktionsfähigkeit des selbstleuchtenden Kennzeichens (1) elektrisch oder optisch erfolgt.

7. Schaltungsanordnung nach einem der vorangegangenen Ansprüche, **dadurch gekennzeichnet, daß** bei eingeschalteter Kraftfahrzeugbeleuchtung die Funktionsfähigkeit des selbstleuchtenden Kennzeichens (1) kontinuierlich detektiert wird.

8. Schaltungsanordnung nach einem der Ansprüche 1 bis 6, **dadurch gekennzeichnet, daß** bei eingeschalteter Kraftfahrzeugbeleuchtung die Funktionsfähigkeit des selbstleuchtenden Kennzeichens (1) in vorgegebenen Zeitintervallen detektiert wird.

## Claims

1. Circuit arrangement for a self-illuminating number plate, having a self-illuminating number plate (1) and a controller (4) for activating the self-illuminating number plate,
**characterized in that**
the circuit arrangement has an apparatus (3, 4) for detecting the ability of the self-illuminating number plate (1) to function, and
the arrangement has an additional number plate lamp (5) which is switched off when the controller (4) recognizes the ability of the self-illuminating number plate (1) to operate, and which is switched on when the controller (4) detects a malfunction in the self-illuminating number plate.

2. Circuit arrangement according to Claim 1, **characterized in that** the controller (4) establishes the ability of the self-illuminating number plate (1) to operate using a signal from the self-illuminating number plate (1).

3. Circuit arrangement according to either of the preceding claims, **characterized in that** the controller (4) activates the self-illuminating number plate (1) when the motor vehicle containing the circuit arrangement is unlocked.

4. Circuit arrangement according to Claim 3, **characterized in that**, when the motor vehicle is unlocked, the self-illuminating number plate (1) is used to illuminate the surroundings when the ability of the self-illuminating number plate (1) to operate is established, while the additional number plate lamp (5) is used to illuminate the surroundings when the controller detects a malfunction in the self-illuminating number plate.

5. Circuit arrangement according to either of Claims 1 and 2, **characterized in that** the controller (4) activates the additional number plate lamp (5) when the motor vehicle containing the circuit arrangement is unlocked.

6. Circuit arrangement according to one of the preceding claims, **characterized in that** the ability of the self-illuminating number plate (1) to operate is detected electrically or optically.

7. Circuit arrangement according to one of the preceding claims, **characterized in that** the ability of the self-illuminating number plate (1) to function is continuously detected when the lights of the motor vehicle are switched on.

8. Circuit arrangement according to one of Claims 1 to 6, **characterized in that** the ability of the self-illuminating number plate (1) to function is detected at predefined time intervals when the lights of the motor vehicle are switched on.

## Revendications

1. Circuit électrique pour une plaque d'immatriculation luminescente avec une plaque d'immatriculation luminescente (1) et un appareil de commande (4) pour commander la plaque d'immatriculation luminescente, **caractérisé en ce que** le circuit électrique comporte un dispositif (3, 4) pour détecter l'aptitude au fonctionnement de la plaque d'immatriculation luminescente (1), et le circuit comprend une lampe de plaque supplémentaire (5), qui est désactivée lorsque l'appareil de commande (4) détecte l'aptitude au fonctionnement de la plaque d'immatriculation luminescente (1), et qui est activée lorsque l'appareil de commande (4) détecte un défaut de fonctionnement de la plaque d'immatriculation luminescente (1).

2. Circuit électrique selon la revendication 1, **caractérisé en ce que** l'appareil de commande (4) constate l'aptitude au fonctionnement de la plaque d'immatriculation luminescente (1) à l'aide d'un signal de la plaque d'immatriculation luminescente (1).

3. Circuit électrique selon l'une quelconque des revendications précédentes, **caractérisé en ce que** l'appareil de commande (4) commande la plaque d'immatriculation luminescente (1) lorsque le véhicule automobile comportant le circuit électrique est déverrouillé.

4. Circuit électrique selon la revendication 3, **caractérisé en ce que**, lors du déverrouillage du véhicule automobile, la plaque d'immatriculation luminescente (1) est utilisée comme éclairage ambiant après constatation de l'aptitude au fonctionnement de la plaque d'immatriculation luminescente (1), tandis que la lampe de plaque supplémentaire (5) est utilisée comme éclairage ambiant lorsque l'appareil de commande détecte un défaut de fonctionnement de la plaque d'immatriculation luminescente.

5. Circuit électrique selon la revendication 1 ou 2, **caractérisé en ce que** l'appareil de commande (4) commande la lampe de plaque supplémentaire (5) lorsque le véhicule automobile comportant le circuit électrique est déverrouillé.

6. Circuit électrique selon l'une quelconque des revendications précédentes, **caractérisé en ce que** la détection de l'aptitude au fonctionnement de la plaque d'immatriculation luminescente (1) est effectuée par voie électrique ou optique.

7. Circuit électrique selon l'une quelconque des revendications précédentes, **caractérisé en ce que**, lorsque l'éclairage du véhicule automobile est activé, l'aptitude au fonctionnement de la plaque d'immatriculation luminescente (1) est détectée en continu.

8. Circuit électrique selon l'une quelconque des revendications 1 à 6, **caractérisé en ce que**, lorsque l'éclairage du véhicule automobile est activé, l'aptitude au fonctionnement de la plaque d'immatriculation luminescente (1) est détectée à des intervalles de temps prédéterminés.
